# FASCICULE DE BREVET EUROPEEN

(11) **EP 1 653 052 B1**
(45) Date de publication et mention de la délivrance du brevet: **08.04.2009**
(21) Numéro de dépôt: 05292034.5
(22) Date de dépôt: 29.09.2005
(51) Int. Cl.: F01D 25/08

(54) **Dispositif de lubrification d'un composant dans une turbomachine**
Vorrichtung zum Schmieren eines Bauteils einer Strömungsmaschine
Device for lubricating a turbine component

(30) Priorité: 27.10.2004 FR 0411435
(43) Date de publication de la demande: 03.05.2006
(73) Titulaire: SNECMA, 75015 Paris (FR)
(72) Inventeur: Prestel, Sebastien, 91290 Arpajon (FR); Renon, Olivier, 77540 Courpalay (FR); Soupizon, Jean-Luc, 77000 Vaux le Penil (FR)
(74) Mandataire: Ramey, Daniel

(56) Documents cités:
- WO-A-98/39609
- DE-A1- 19 648 641
- US-A- 3 874 676

## Description

La présente invention concerne un dispositif de lubrification d'un composant dans une turbomachine, en particulier d'un palier d'arbre dans un turboréacteur.

Une turbomachine comprend une turbine à gaz composée d'une pluralité d'étages d'aubes fixes et d'une pluralité d'étages d'aubes mobiles portées par un rotor monté sur un arbre de turbine. L'arbre de turbine est centré et guidé en rotation par des paliers nécessitant une alimentation continue en huile pour limiter leur usure par frottement.

Le document US-A-3,874,676 décrit un dispositif de lubrification et de refroidissement d'un palier d'arbre d'une turbine, comportant des moyens de circulation d'huile à haute pression séparés par des joints annulaires d'étanchéité de moyens de circulation d'huile à basse pression.

On connaît également un dispositif de lubrification d'un palier de turbomachine comprenant :
- une pièce annulaire de support du palier, montée sur le stator de la
- turbomachine et délimitant une chambre de lubrification autour du palier, et
- un couvercle annulaire comportant une arrivée d'huile de lubrification du palier, ce couvercle annulaire étant monté à étanchéité sur une face radiale d'extrémité de la pièce annulaire de support, l'étanchéité étant réalisée par un joint annulaire monté entre la pièce de support et le couvercle, et ledit couvercle comportant une enceinte annulaire de circulation d'air de pressurisation et de refroidissement qui est alimentée à son extrémité amont par des conduits formés dans la pièce de support et débouchant à leurs extrémités aval sur la face radiale d'extrémité de la pièce de support autour du joint annulaire.

En fonctionnement de la turbomachine, la température de l'air de pressurisation et de refroidissement circulant dans les conduits de la pièce de support et dans l'enceinte annulaire du couvercle est d'environ 200°C. Cet air permet essentiellement de pressuriser l'enceinte arrière et aussi de, refroidir la matière située à proximité de ces conduits ou de l'enceinte annulaire du couvercle alors que les parties plus éloignées de la pièce de support et du couvercle, notamment les parties de la face radiale d'extrémité de la pièce de support situées entre les extrémités aval des conduits précités peuvent atteindre des températures de 370°C environ.

Le joint annulaire qui est situé à proximité de la face radiale d'extrémité de la pièce de support est ainsi exposé localement à ces fortes températures. Ce joint est en général un joint en élastomère du type Viton® qui a une tenue thermique limitée au-delà de 200°C. Il n'assure donc pas de façon efficace l'étanchéité de la chambre de lubrification du palier, et des fuites d'huile peuvent apparaître entre la face radiale d'extrémité de la pièce de support et l'extrémité amont de l'enceinte annulaire du couvercle en fonctionnement de la turbomachine. Ces fuites d'huile augmentent la consommation du dispositif de lubrification en huile, et peuvent également entraîner des dépôts de coke sur les composants de la turbomachine situés à proximité de la fuite qui peuvent former des points chauds et réduire leur durée de vie.

L'invention a notamment pour but d'apporter une solution simple, économique et efficace à ce problème.

Elle a pour objet un dispositif de lubrification d'un composant d'une turbomachine du type précité, dans lequel le joint annulaire peut être utilisé sans risque de détérioration du joint et de fuite d'huile vers l'extérieur de la chambre de lubrification.

Elle propose à cet effet un dispositif de lubrification d'un composant dans une turbomachine, en particulier d'un palier d'arbre dans un turboréacteur, comprenant :
- une pièce annulaire de support du composant, montée sur des éléments fixes et délimitant une chambre de lubrification autour du composant, et
- un couvercle annulaire comportant une arrivée d'huile de lubrification du composant , ce couvercle annulaire étant monté à étanchéité sur une face radiale d'extrémité de ladite pièce annulaire de support, l'étanchéité étant réalisée par un joint annulaire monté entre la pièce de support et le couvercle, ledit couvercle comportant une enceinte annulaire d'amenée d'air de pressurisation et de refroidissement, alimentée à son extrémité amont par des conduits formés dans la pièce de support et débouchant à leurs extrémités aval autour du joint annulaire précité,
caractérisé en ce qu'il comprend un canal annulaire de circulation d'air de pressurisation et de refroidissement formé entre la face radiale d'extrémité de la pièce de support et l'extrémité amont de ladite enceinte et reliant entre elles les extrémités aval des conduits de la pièce de support.

Ce canal annulaire de circulation d'air permet d'amener l'air de pressurisation et de refroidissement sur les parties de la face radiale d'extrémité de la pièce de support situées entre les extrémités aval des conduits précités, et ainsi de refroidir le joint sur tout son périmètre. Le joint annulaire n'est plus exposé localement à des températures très supérieures à 200°C et peut assurer de façon fiable l'étanchéité de la chambre de lubrification.

L'air de pressurisation et de refroidissement qui circule à l'intérieur du canal annulaire a une pression supérieure à celle du mélange d'air et d'huile à l'intérieur de la chambre de lubrification et à celle de l'air à l'extérieur de la chambre de lubrification et s'oppose aux fuites d'air et d'huile hors de cette chambre.

Avantageusement, le canal annulaire débouche au voisinage du joint d'étanchéité sur l'interface des surfaces de montage de ce joint, afin de refroidir efficacement la matière adjacente au joint annulaire. Ce canal débouche par exemple sur l'interface des surfaces de montage du joint par l'intermédiaire d'un chanfrein du bord périphérique de la face radiale de la pièce de support.

Dans un mode de réalisation de l'invention, le canal annulaire est formé dans une face radiale de l'extrémité amont du couvercle en regard des extrémités aval des conduits précités de la pièce de support, et comporte des orifices alignés avec ces conduits et débouchant dans ladite enceinte. De cette façon, ce canal annulaire assure le refroidissement du joint sur toute sa circonférence, sans gêner le passage de l'air dans les conduits précités de la pièce de support.

Dans un autre mode de réalisation de l'invention, le canal annulaire est formé par un chanfrein du bord périphérique de la face radiale d'extrémité de la pièce de support et s'étend radialement entre un jeu annulaire axial ménagé entre cette face radiale d'extrémité et l'extrémité amont de l'enceinte, au niveau des extrémités aval des conduits précités de la pièce de support, et l'interface des surfaces de montage du joint annulaire.

Dans ce mode de réalisation, le canal annulaire communique avec l'enceinte du couvercle par au moins un perçage d'une paroi d'extrémité amont de cette enceinte, et un second joint d'étanchéité est avantageusement monté dans le jeu annulaire axial précité et comporte des orifices de passage d'air de pressurisation et de refroidissement, alignés avec les conduits de la pièce support. On améliore ainsi l'étanchéité de la chambre de lubrification et on évite les fuites d'air et d'huile hors de cette chambre, même en cas de détérioration du second joint d'étanchéité.

L'invention propose également un turboréacteur, comprenant une turbine dont l'arbre est guidé par un palier équipé d'un dispositif de lubrification comportant un canal annulaire du type précité.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique en coupe longitudinale d'un dispositif de lubrification d'un palier d'arbre dans un turboréacteur selon la technique connue ;
- la figure 2 est une vue schématique partielle en coupe longitudinale à plus grande échelle d'un dispositif de lubrification selon l'invention, illustrant la zone d'étanchéité par le joint annulaire ;
- la figure 3 est une vue schématique partielle en coupe longitudinale d'une variante du dispositif de lubrification selon l'invention.

Dans les dessins, ce qui est à gauche est en amont ou en avant et ce qui est à droite est en aval ou en arrière dans le turboréacteur.

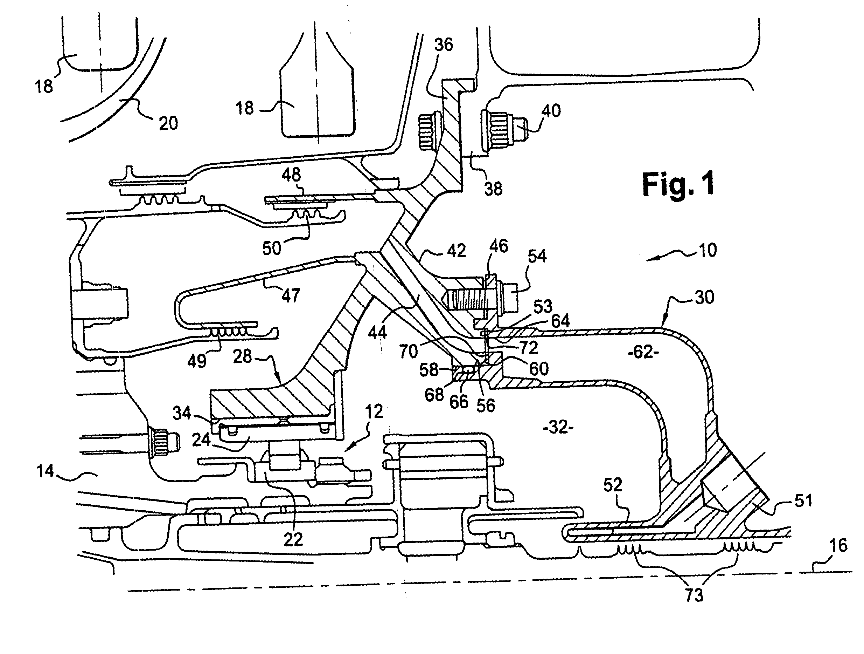

On se réfère d'abord à la figure 1 qui est une demi-vue longitudinale schématique d'un dispositif 10 connu de lubrification d'un palier 12 d'un arbre 14 de turbine basse-pression de turboréacteur, en coupe partielle selon un plan passant par l'axe 16 de rotation de la turbine.

Le rotor de la turbine comprend des disques de turbine 18, partiellement représentés, liés entre eux et portant à leur périphérie des étages d'aubes mobiles (non représentées), les disques 18 étant séparés les uns des autres par des étages d'aubes fixes (non représentées) et étant reliés à l'arbre de turbine 14 par l'intermédiaire d'un cône d'entraînement 20 partiellement représenté.

Le palier 12 est dans l'exemple représenté un roulement dont la cage interne 22 est portée par l'arbre 14 et dont la cage externe 24 est portée par une pièce annulaire 28 munie d'un couvercle annulaire 30 et délimitant une chambre annulaire de lubrification 32 autour du palier d'arbre 12 et d'une partie correspondante de l'arbre 14 et de son embout arrière.

La pièce annulaire 28 a une forme sensiblement tronconique et comprend à son extrémité amont de faible diamètre un passage cylindrique 34 d'axe 16 dans lequel est montée la cage externe 24 du palier 12, et à son extrémité aval de plus grand diamètre une bride annulaire 36 qui est appliquée sur une bride annulaire 38 d'un élément fixe de la turbine et fixée sur celle-ci par des moyens appropriés par exemple du type vis-écrou 40.

La partie médiane de la pièce annulaire 28 comprend une paroi tronconique 42 qui s'étend vers l'aval et vers l'axe 16 de rotation de la turbine, et dans laquelle sont formés des conduits 44 de passage d'air qui débouchent à leur extrémité amont sur la face externe amont de la pièce annulaire 28 et à leur extrémité aval sur une face radiale d'extrémité 46 de la paroi 42.

La pièce annulaire 28 comporte également deux jupes sensiblement cylindriques 47, 48 s'étendant vers l'amont et entre lesquelles débouchent les extrémités amont des conduits 44. Les extrémités amont des jupes 47, 48 coopèrent à étanchéité avec des joints en labyrinthe 49, 50, respectivement, portés par des éléments du rotor de la turbine.

Le couvercle annulaire 30 est fermé à son extrémité aval montée à étanchéité autour de l'arbre de turbine 14 et comporte au moins un embout tubulaire 51 d'alimentation en huile relié à un conduit 52 débouchant dans la chambre de lubrification 32 au voisinage du palier 12. L'extrémité amont du couvercle annulaire 30 comporte une face radiale annulaire 53 montée à étanchéité sur la face radiale d'extrémité 46 de la paroi 42 et fixée sur celle-ci par des vis 54, et une portée cylindrique externe 56 coopérant avec une portée cylindrique interne 58 de l'extrémité aval de la paroi 42. Un chanfrein 60 est formé dans le bord périphérique interne de la face radiale 46 et entoure la portée cylindrique 56 de l'extrémité amont du couvercle.

Le couvercle annulaire 30 comporte une enceinte annulaire 62 de passage d'air de pressurisation et de refroidissement qui s'étend d'amont en aval et débouche à son extrémité aval sur la périphérie de l'arbre 14, et qui communique à son extrémité amont, par une pluralité d'orifices 64 formés dans la face d'extrémité amont 53 du couvercle 30, avec les extrémités aval des conduits 44 précités formés dans la paroi 42 de la pièce 28.

L'étanchéité de la chambre de lubrification 32, à la jonction entre la pièce 28 et le couvercle 30, est assurée par un joint torique d'étanchéité 66 monté entre les portées cylindriques 58 de la paroi 42 et 56 du couvercle 30, dans une rainure annulaire 68 de la portée cylindrique 56 du couvercle 30. Un autre joint annulaire d'étanchéité 70 peut en outre être monté entre les faces radiales d'extrémité 53 et 46 du couvercle 30 et de la pièce 28 au niveau des extrémités aval des conduits 44, ce joint 70 comportant des orifices 72 de passage d'air alignés avec les conduits 44 de la paroi 42 et les orifices 64 du couvercle 30.

L'étanchéité de la chambre de lubrification 32 à l'extrémité aval du couvercle est assurée par des joints en labyrinthe 73 portés par l'arbre 14 et situés de part et d'autre de l'extrémité aval de l'enceinte annulaire 62.

En fonctionnement du turboréacteur, de l'air de pressurisation et de refroidissement à une température d'environ 200°C circule depuis l'amont vers l'aval en passant entre les jupes 47 et 48 et dans les conduits 44 de la pièce 28 puis dans l'enceinte 62 du couvercle 30. La pression de l'air dans les conduits 44 de la pièce et l'enceinte 62 du couvercle 30 est supérieure aux pressions à l'intérieur de la chambre de lubrification 32 et à l'extérieur du dispositif de lubrification 10, de sorte que le mélange d'air et d'huile contenu dans la chambre de lubrification 32 ne peut s'échapper par les joints en labyrinthe 49, 50, 73.

L'amenée d'air de pressurisation et de refroidissement permet de diminuer la température de façon sensible, par exemple de la faire passer de 350-370°C environ à 200°C environ, dans les zones voisines des conduits 44 de passage d'air et dans les parties du joint 66 (et du joint 70) qui sont les plus proches de ces conduits 44. Toutefois, les parties de ces joints qui sont situées entre les extrémités aval des conduits 44 ne sont pas refroidies et restent à des températures élevées. Le joint annulaire 66 est ainsi soumis à des différences de températures importantes sur sa circonférence qui entraînent sa détérioration et sont susceptibles de provoquer des fuites d'huile entre les faces radiales 46 et 53 de la pièce 28 et du couvercle 30, vers l'extérieur de la chambre 32.

La présente invention a pour objet un dispositif de lubrification du type précédemment décrit qui comprend un canal annulaire de circulation d'air de pressurisation et de refroidissement formé entre la face radiale 46 de la pièce 28 et la face radiale 53 du couvercle 30, pour relier les extrémités aval des conduits 44 et refroidir le joint annulaire 66 sur tout son périmètre.

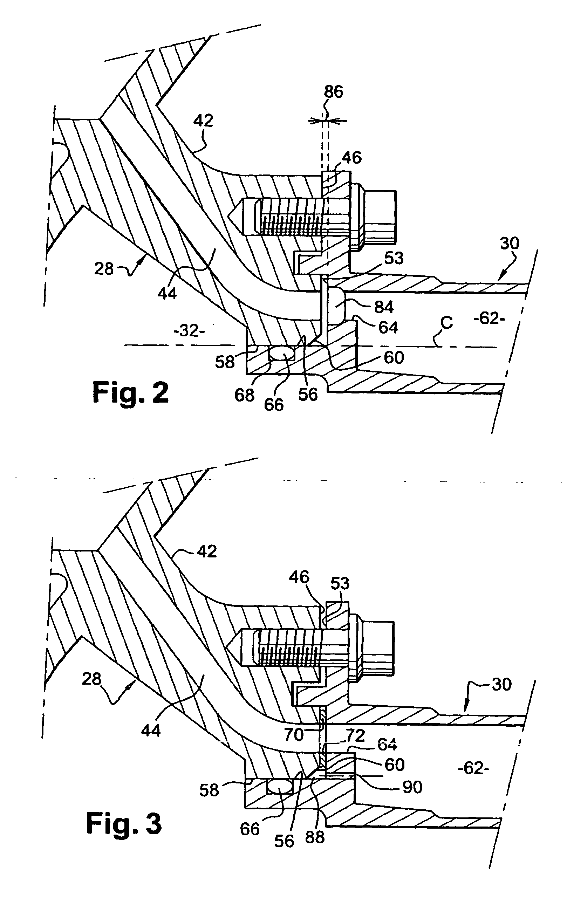

Dans le mode de réalisation représenté partiellement en figure 2, ce canal annulaire 84 est formé en creux dans la face radiale d'extrémité amont 53 du couvercle 30 au niveau des orifices 64 de l'enceinte 62 et en regard des extrémités aval des conduits 44 de la pièce 28.

Un jeu annulaire axial 86 est avantageusement ménagé entre la face radiale d'extrémité aval 46 de la pièce 28 et la face radiale d'extrémité amont 53 du couvercle 30, et s'étend radialement vers l'intérieur depuis les extrémités aval des conduits 44, de sorte que le canal annulaire 84 peut déboucher sur la surface de contact C des portées cylindriques interne 58 et externe 56 de la pièce 28 et du couvercle 30 par l'intermédiaire du chanfrein 60 précité du bord périphérique de la face radiale d'extrémité aval 46 de la pièce 28.

Dans la variante de réalisation représentée partiellement en figure 3, le canal annulaire 88 est formé par le chanfrein annulaire 60 du bord périphérique de la face radiale 46 de la pièce 28, et peut être alimenté en air de pressurisation et de refroidissement par l'intermédiaire du jeu axial 86 précité ou d'un ou de plusieurs perçages 90 formés dans la face radiale d'extrémité amont 53 du couvercle 30 et débouchant dans l'enceinte 62. Dans ce dernier cas, un joint d'étanchéité 70 précité peut être monté entre les faces radiales d'extrémité amont 53 et aval 46 du couvercle 30 et de la pièce 28 au niveau des extrémités aval des conduits 44, les orifices 72 du joint 70 étant alignés avec les conduits 44 et les orifices 64 pour le passage de l'air de refroidissement.

Le refroidissement du joint 66 sur tout son périmètre permet d'utiliser un joint en Viton® ou analogue dans un domaine de températures ne dépassant pas 200°C environ, où le joint garde toute son efficacité et a une durée de vie importante.

La présente invention a également pour objet un turboréacteur, comprenant une turbine dont l'arbre est guidé par un palier équipé d'un dispositif de lubrification comportant un canal annulaire du type précité.

## Revendications

1. Dispositif de lubrification (10) d'un composant dans une turbomachine, en particulier d'un palier d'arbre (12) dans un turboréacteur, comprenant :
- une pièce annulaire (28) de support du composant, montée sur des éléments fixes et délimitant une chambre de lubrification (32) autour du composant, et
- un couvercle annulaire (30) comportant une arrivée d'huile de lubrification du composant , ce couvercle annulaire (30) étant monté à étanchéité sur une face radiale d'extrémité (46) de ladite pièce annulaire de support (28), l'étanchéité étant réalisée par un joint annulaire (66) monté entre la pièce de support (28) et le couvercle (30), ledit couvercle (30) comportant une enceinte annulaire (62) d'amenée d'air de pressurisation et de refroidissement, alimentée à son extrémité amont par des conduits (44) formés dans la pièce de support (28) et débouchant à leurs extrémités aval autour du joint annulaire (66) précité,
**caractérisé en ce qu'**il comprend un canal annulaire (84, 88) de circulation d'air de pressurisation et de refroidissement formé entre la face radiale d'extrémité (46) de la pièce de support (28) et l'extrémité amont de ladite enceinte (62) et reliant entre elles les extrémités aval des conduits (44) de la pièce de support (28).

2. Dispositif de lubrification selon la revendication 1, **caractérisé en ce que** ledit canal annulaire (84, 88) débouche au voisinage du joint d'étanchéité (66) à l'interface (C) des surfaces (56, 58) de montage de ce joint (66).

3. Dispositif de lubrification selon la revendications 1 ou 2, **caractérisé en ce que** ledit canal annulaire (84) est formé dans une face radiale (53) de l'extrémité amont du couvercle (30) en regard des extrémités aval des conduits (44) précités de la pièce de support (28), et comporte des orifices (64) alignés avec ces conduits (44) et débouchant dans ladite enceinte (62).

4. Dispositif de lubrification selon l'une des revendications précédentes, **caractérisé en ce que** ledit canal annulaire (84) débouche sur l'interface (C) des surfaces (56, 58) de montage du joint par l'intermédiaire d'un chanfrein (60) du bord périphérique de la face radiale (46) de la pièce de support (28).

5. Dispositif selon la revendication 1, **caractérisé en ce qu'**un jeu annulaire axial (86) est ménagé entre la face radiale d'extrémité (46) de la pièce de support (28) et l'extrémité amont de l'enceinte (62), au niveau des extrémités aval des conduits (44) précités de la pièce de support (28).

6. Dispositif selon la revendication 5, **caractérisé en ce que** ledit canal annulaire (88) est formé par un chanfrein (60) du bord périphérique de la face radiale d'extrémité (46) de la pièce de support (28), ce chanfrein (60) reliant le jeu axial (86) précité et l'interface (C) des surfaces (56, 58) de montage du joint annulaire (66).

7. Dispositif de lubrification selon la revendication 6, **caractérisé en ce que** le canal annulaire (88) communique avec l'enceinte (62) précitée du couvercle (30) par au moins un perçage (90) d'une paroi d'extrémité amont de cette enceinte (62).

8. Dispositif de lubrification selon l'une des revendications 5 à 7, **caractérisé en ce qu'**un autre joint d'étanchéité (70) est monté dans le jeu annulaire axial (86) précité et comporte des orifices (72) de passage d'air de pressurisation et de refroidissement, alignés avec les conduits (44) précités de la pièce de support (28).

9. Turboréacteur, comprenant une turbine dont l'arbre (14) est guidé par un palier (12) équipé de moyens de lubrification, **caractérisé en ce que** les moyens de lubrification comprennent un dispositif de lubrification (10) selon l'une des revendications précédentes.

## Claims

1. A lubrication device (10) for lubricating a component in a turbomachine, in particular a shaft bearing (12) in a turbojet, the device comprising:
- an annular component support part (28) mounted on stationary elements and defining a lubrication chamber (32) around the component; and
- an annular cover (30) including an oil inlet for lubricating the component, the annular cover (30) being mounted in sealed manner on a radial end face (46) of said annular support part (28), sealing being provided by an annular gasket (66) mounted between the support part (28) and the cover (30), said cover (30) including an annular enclosure (62) for feeding pressurizing and cooling air, which enclosure is fed at its upstream end by ducts (44) formed through the support part (28) and having their downstream ends opening out around the above-mentioned annular gasket (66);
the device being **characterized in that** it includes an annular channel (84, 88) for providing a flow of pressurizing and cooling air, which channel is formed between the radial end face (46) of the support part (28) and the upstream end of said enclosure (62), and interconnecting the downstream ends of the ducts (44) in the support part (28).

2. A lubrication device according to claim 1, **characterized in that** said annular channel (84, 88) opens out in the vicinity of the sealing gasket (66) at the interface (C) between the mounting surfaces (56, 58) of said gasket (66).

3. A lubrication device according to claim 1 or claim 2, **characterized in that** said annular channel (84) is formed in an upstream radial end face (53) of the cover (30) facing the downstream ends of the above-mentioned ducts (44) in the support part (28), and includes orifices (64) in alignment with said ducts (44) and opening out into said enclosure (62).

4. A lubrication device according to any preceding claim, **characterized in that** said annular channel (84) opens out to the interface (C) between the mounting surfaces (56, 58) of the gasket via a chamfer (60) in the peripheral edge of the radial face (46) of the support part (28).

5. A device according to claim 1, **characterized in that** an axially extending annular gap (86) is formed between the radial end face (46) of the support part (28) and the upstream end of the enclosure (62) level with the downstream ends of the above-mentioned ducts (44) in the support part (28).

6. A device according to claim 5, **characterized in that** said annular channel (88) is formed by a chamfer (60) in the peripheral edge of the radial end face (46) of the support part (28), said chamfer (60) interconnecting the above-mentioned axially-extending gap (86) and the interface (C) of the mounting surfaces (56, 58) of the annular gasket (66).

7. A lubrication device according to claim 6, **characterized in that** the annular channel (88) communicates with the above-mentioned enclosure (62) of the cover (30) via at least one hole (90) in an upstream end wall of said enclosure (62).

8. A lubrication device according to any one of claims 5 to 7, **characterized in that** another sealing gasket (70) is mounted in the above-mentioned axially-extending annular gap (86) and includes orifices (72) for passing pressurizing and cooling air, which orifices are in alignment with the above-mentioned ducts (44) in the support part (28).

9. A turbojet comprising a turbine whose shaft (14) is guided by a bearing (12) fitted with lubrication means, the turbojet being **characterized in that** the lubrication means include a lubrication device (10) according to any preceding claim.

## Patentansprüche

1. Vorrichtung zum Schmieren (10) eines Bauteils einer Turbomaschine, insbesondere eines Wellenlagers (12) eines Turboluftstrahltriebwerks, bestehend aus:
- einem ringförmigen Halteteil (28) des Bauteils, das an feststehenden Elementen angebracht ist und eine Schmierkammer (32) um das Bauteil herum umgrenzt, und
- einem ringförmigen Deckel (30), der eine Schmierölzuführung für das Bauteil aufweist, wobei dieser ringförmige Deckel (30) mit Dichtigkeit an einer radialen Endseite (46) dieses ringförmigen Halteteils (28) angebracht ist, wobei die Dichtigkeit durch eine ringförmige Dichtung (66) hergestellt wird, die zwischen dem Halteteil (28) und dem Deckel (30) sitzt, wobei dieser Deckel (30) einen ringförmigen abgeschlossenen Raum (62) zur Zuführung von Luft zur Unter-Druck-Setzung und Kühlung enthält, welcher an seinem vorderen Ende durch Leitungen (44) gespeist wird, die in dem Halteteil (28) ausgebildet sind und an ihren hinteren Enden um die oben genannte ringförmige Dichtung (66) herum münden,
**dadurch gekennzeichnet,**
**dass** sie einen ringförmigen Kanal (84, 88) zur Zirkulation von Luft zur Unter-Druck-Setzung und Kühlung aufweist, der zwischen der radialen Endseite (46) des ringförmigen Halteteils (28) und dem vorderen Ende des abgeschlossenen Raums (62) gebildet ist und die hinteren Enden der Leitungen (44) des Halteteils (28) miteinander verbindet.

2. Schmiervorrichtung nach Anspruch 1,
**dadurch gekennzeichnet,**
**dass** dieser ringförmige Kanal (84, 88) nahe bei der Dichtung (66) an der Grenzfläche (C) der Sitzflächen (56, 58) dieser Dichtung (66) mündet.

3. Schmiervorrichtung nach Anspruch 1 oder 2,
**dadurch gekennzeichnet,**
**dass** dieser ringförmige Kanal (84) in einer radialen Seite (53) des vorderen Endes des Deckels (30) gegenüber den hinteren Enden der oben genannten Leitungen (44) des Halteteils (28) gebildet ist und Öffnungen (64) aufweist, die auf diese Leitungen (44) ausgerichtet sind und in dem abgeschlossenen Raum (62) münden.

4. Schmiervorrichtung nach einem der vorherigen Ansprüche,
**dadurch gekennzeichnet,**
**dass** dieser ringförmige Kanal (84) in der Grenzfläche (C) der Sitzflächen (56, 58) der Dichtung vermittels einer Abschrägung (60) des Außenrandes der radialen Seite (46) des Halteteils (28) mündet.

5. Vorrichtung nach Anspruch 1,
**dadurch gekennzeichnet,**
**dass** ein axiales ringförmiges Spiel (86) zwischen der radialen Endseite (46) des Halteteils (28) und dem vorderen Ende des abgeschlossenen Raums (62) in Höhe der hinteren Enden der oben genannten Leitungen (44) des Halteteils (28) gebildet ist.

6. Vorrichtung nach Anspruch 5,
**dadurch gekennzeichnet,**
**dass** der ringförmige Kanal (88) durch eine Abschrägung (60) des Außenrandes der radialen Endseite (46) des ringförmigen Halteteils (28) gebildet ist, wobei diese Abschrägung (60) das oben genannte axiale Spiel (86) und die Grenzfläche (C) der Sitzflächen (56, 58) der ringförmigen Dichtung (66) verbindet.

7. Schmiervorrichtung nach Anspruch 6,
**dadurch gekennzeichnet,**
**dass** der ringförmige Kanal (88) mit dem oben genannten abgeschlossenen Raum (62) des Deckels (30) durch mindestens eine Bohrung (90) durch eine vordere Endwand dieses abgeschlossenen Raums (62) kommuniziert.

8. Schmiervorrichtung nach einem der Ansprüche 5 bis 7,
**dadurch gekennzeichnet,**
**dass** eine weitere Dichtung (70) in diesem axialen ringförmigen Spiel (86) sitzt und Durchlassöffnungen (72) für Luft zur Unter-Druck-Setzung und Kühlung aufweist, die auf diese Leitungen (44) des Halteteils (28) ausgerichtet sind.

9. Turboluftstrahltriebwerk mit einer Turbine, deren Welle (14) durch ein Lager (12) geführt ist, das mit Schmiermitteln ausgerüstet ist,
**dadurch gekennzeichnet,**
**dass** die Schmiermittel eine Vorrichtung zum Schmieren (10) nach einem der vorherigen Ansprüche umfassen.
